## Europäisches Patentamt
## European Patent Office
## Office européen des brevets

(11) Publication number: **0 300 824**
**A2**

# EUROPEAN PATENT APPLICATION

(21) Application number: **88306785.2**

(22) Date of filing: **22.07.88**

(51) Int. Cl.⁴: **H 04 L 9/02**

(30) Priority: **23.07.87 GB 8717475**

(43) Date of publication of application:
**25.01.89 Bulletin 89/04**

(84) Designated Contracting States:
**AT BE CH DE ES FR GB GR IT LI LU NL SE**

(71) Applicant: **STANVIEW LIMITED**
**Davill House Third Cross Road**
**Twickenham Middlesex TW2 5ED (GB)**

(72) Inventor: **Race, John Philip Adrian**
**12, Thames Street**
**Abingdon Oxfordshire OX14 3HZ (GB)**

**Gerrard, Richard John**
**Davill House Third Cross Road**
**Twickenham Middlesex TW2 5ED (GB)**

(74) Representative: **Smith, Martin Stanley et al**
**Stevens, Hewlett & Perkins 5, Quality Court Chancery Lane**
**London WC2A 1HZ (GB)**

(54) **Cryptographic communication.**

(57) A cryptographic communication system encrypts digital information to be transmitted by combination with a digital one time key derived from an optical digital disk. The system can run on standard microcomputers and includes an initialisation routine whereby a common initial address for both transmit and receive disks is settled by an arbitration technique based on last recorded disk positions.

FIG 1

EP 0 300 824 A2

0 300 824

**Description**

## CRYPTOGRAPHIC COMMUNICATION

The invention relates to the encryption and decryption of digital data or digitised signals, for example voice signals. The encrypted signals are in digital form and may be transmitted over any suitable communication link including telephone lines, network links, fibre-optic, radio or microwave paths, or satellite links, for example.

Encryption techniques offer security against interpretation of data extracted from the communication link by unauthorised access. Most rely on the provision of a cipher key at each end of the link, the signal being encrypted by combination of successive parts with the key at the transmitter and being decrypted by the converse operation with the key at the receiver.

Sophisticated crypto-analysis techniques allow unauthorised decryption of signals which use inadequate keys. The optimum key should be totally unpredictable and used only once, namely a random one-time key (OTK).

As a random key it has been proposed to use a recording made of physically generated noise, for example the thermally generated electrical noise of a diode junction. Such a proposal is made, for example, in British patent specification No: 1230751, where noise signals recorded on tape are used as the random key. However, the signal is recorded in analogue form and is digitised at the transmitter for encryption and at the receiver for decryption. It is inevitable with such an arrangement that the digitised key signals at the transmitter and the receiver will differ at times because of differences in the characteristics of the digitisers. Encryption / decryption errors will consequently be introduced and while these may be tolerable for low quality speech transmission, they are not for digital data transmission.

Methods and algorithms have been proposed for generating pseudo random keys having extremely long repetition cycles. However, once the principles of such methods or algorithms are known, the task of crypto-analysis is greatly facilitated. One such method is described in British patent specification No: 1605250 where there is described a system which identifies a cypher key word (the "state" word) by its address in a random access memory and which replenishes the RAM periodically with digital key information from a tape. However, the "state" words derived in this way are only initial words, and subsequent "state" words are derived from previous such words by a "long cycle" algorithm. Such a system is susceptible to being broken by crypto-analysis once the algorithm is known and is not a true one time key system.

The present invention seeks to provide an encryption system which has the security of a one time key system, which can operate in real time at conventional data transmission speeds, which has an inherently very low encryption error rate and which can utilise commercially available components for economy.

According to the invention there is provided a cryptographic communication system comprising at least two transmitter/receiver terminals, each terminal having a microprocessor, a random access memory and a random access mass storage unit with a digital mass storage device, the mass storage devices holding identical digital key data for encryption and decryption; a communication link coupling the terminals; and programs for controlling the microprocessors whereby digital or digitised signals to be transmitted between the terminals are encrypted and decrypted, the programs being effective to determine for each transmission (a) an initialisation mode and (b) a transmission mode, the initialisation mode being such as to determine a particular mass storage device start address unique to that transmission from which data will start to be read as the one time key and the transmission mode being such as to cause the said signals to be encrypted by digital combination with continuously successive digits from one mass storage device in real time starting at said start address, and to cause decryption by a complementary digital operation with corresponding parts of the one time key from the other mass storage device.

By using digital mass storage devices for real time encryption and decryption the invention provides encryption accuracy and allows the use of a truly random one time key. Furthermore, by using random access mass storage devices and the initialisation technique described, further security is ensured since there is a degree of unpredictability in the choice of the one time key from effectively many in the key data on the storage devices.

As used herein "random access" means access by address in a rapid and non-sequential manner. Thus, tape drive systems are specifically not included, since initialisation would be unacceptably slow. Suitable random access mass storage devices include optical disks and optical disk drives are available as micro-computer peripheral devices. It is envisaged that the invention may use optical disks of two kinds: (a) user writeable disks and (b) pre-written commercial disks. User writeable disks include eraseable optical disks and WORM (write once read many) disks. Currently such disks have capacities of 200-2000 M bytes. An advantage of using writeable disks is that truly random key data can be written, as from a white noise source, for example. A disadvantage is cost.

Pre-written commercial disks include domestic music and/or video disks, known as compact disks (CD's). Also there are pre-written CD ROM disks holding programs and data for computers, and audio/visual aid training CD's. An advantage of using commercial disks is that they are inexpensive. A disadvantage is that the key data thereon is not truly random. However, in practice this disadvantage is greatly alleviated by the unpredictability principle mentioned above. Unauthorised decryption is rendered extremely difficult for two reasons. Firstly the identity of the particular disk from many thousand of available commercial disks must be known. Secondly, the start position for the one time key derived from the disk must be known. Thus it will be

2

seen that for both random user-written disks and commercial pre-written disks the initialisation technique for determining a start position is very relevant to encryption security.

While it is envisaged that some embodiments of the invnetion may employ a dedicated microprocessor arrangement, a preferred aspect of the invention provides that the microprocessor and RAM (Random Access Memory) is part of a standard micro-computer and the programs are disk-based (perhaps carried on the WORM if used) and run under the computer operating system. Advantage can be taken in such an arrangement of the fast built-in arithmetic functions of a micro-computer in effecting the digital encryption/decryption routines. For example, it is convenient to use the conventional exclusive-or (XOR) function to operate on the signal and key digits to produce a stream of encrypted digits for transmission. The same XOR function is used to recover the signal by decryption.

The invention will further be described with reference to the accompanying drawings, of which:-

Figure 1 is a schematic diagram, of a two-terminal communication system embodying the invention;

Figure 2 is a schematic diagram of data flow in the encryption/decryption system of Figure 1;

Figure 3 is a program flow chart of the initialisation and data processing routines;

Figures 4 and 5 are respective flow charts for the decryption and encryption routines; and

Figures 6 and 7 are respective flow charts for two asynchronous interrupt routines.

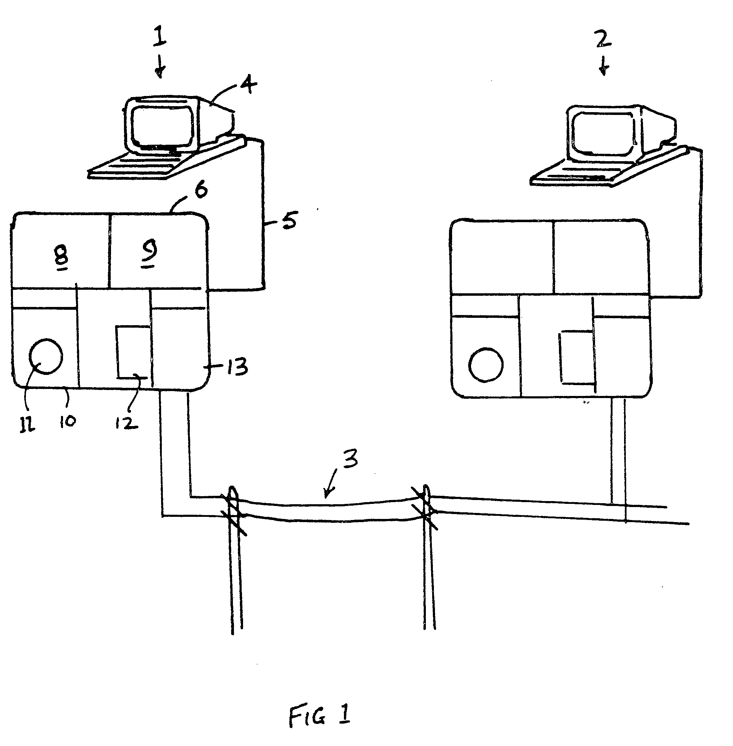

Referring to Figure 1 there are shown two terminals 1 and 2 capable of data transfer over a telephone link 3. The terminals are identical and, with reference to terminal 1, each comprises a first micro-computer 4 with a console, micro-processor, RAM, etc. A serial RS 232 data line 5 connects computer 4 to a second micro-computer 6 via a serial port 7. Computer 6 has a micro-processor 8, a RAM 9, an optical disk drive 10 with an optical disk 11, and a second serial port 12 connected to a modem 13, which in turn is connected to the telephone link 3. The use of two computers at each terminal is a convenient way of illustrating the invention and indeed it is a practical possibility. However, it is to be understood that the described functions can readily be achieved by a single computer, perhaps running concurrent communications and encryption programs.

In the two-computer configuration of Figure 1 the "outside" computers 4 will run communication programs which may be of any suitable commercial kind and which preferably include error detection and correction techniques. The "in clear" signals to be transmitted via the encryption computers 6 will therefore include signals determined by the communication protocol such as acknowledgement signals and perhaps "re-send" signals.

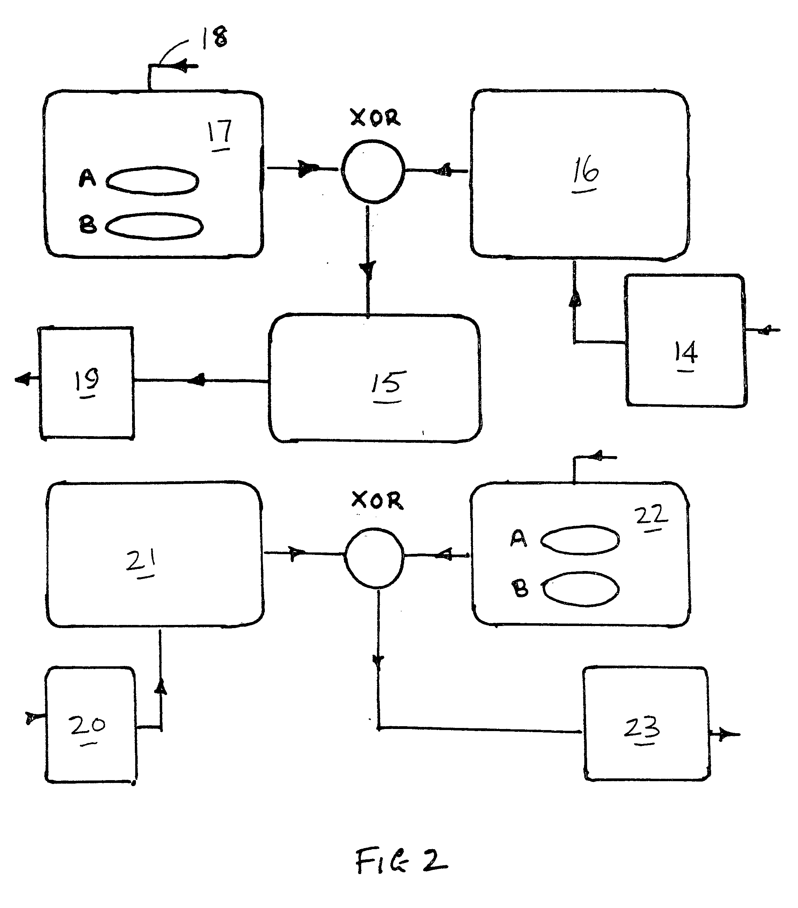

Referring now to Figure 2 there are illustrated data flow patterns for the encryption/decryption computer 6. The RAM of the computer is divided into several buffers. These include an "in clear" data receive buffer 14 connected to the first serial port and an "in clear" data buffer 22 also connected to the first serial port, which port communicates with the first computer 4. Data received from the first computer for transmission is passed to a data received buffer 16 from where it is processed, one byte at a time in an XOR operation controlled by the micro-processor. Each byte of the signal to be transmitted is XOR'd with a respective byte of the one time key derived from an encryption key buffer 17. Buffer 17 is filled with successive parts of the one time key derived from the optical disk drive over line 18. Buffer 17 has two parts A and B which are filled alternately, the arrangement being such that one part is being filled from the disk as the other (preceding) part is being read. In this way disk reading procedures do not interfere with the continuous real-time encryption of the signal. The encrypted signal is fed to a send buffer 15 from where it is transmitted via the telephone link via a port 19.

The system is fully duplex and a port 20 receives data from the telephone link and passes it to a receive buffer 21 from where the data is processed one byte at a time in an XOR operation with respective bytes from a one time key in a decryption key buffer 22. Buffer 22 has two parts A and B which are filled from the optical disk and read alternately in the manner of buffer 17. The decrypted signal is passed to the computer 4 by way of a port 23.

To illustrate the one time key (OTK), one time (OTP) pad approach it should be observed that it has been used for many years for the secure encryption of written communications. The sender and the recipient have each have identical pads, each page of which contains random numbers, e.g.

OTK:    17 38 53 04 34 22 16 72 81 ...

The sender of a message, say 'SEND HELP', converts each symbol to a number, e.g. with A = 01 etc

| Plaintext message: | S | E | N | D | | H | E | L | P |
|---|---|---|---|---|---|---|---|---|---|
| Numeric form: | 19 | 05 | 14 | 04 | 27 | 08 | 05 | 12 | 16 |

He adds the numbers in the above numeric form to the corresponding random numbers in the OTK, starting at the beginning of topmost page in the pad. Encrypted message: 36 43 67 08 61 30 21 84 97

Any reversible operator other than addition may also be used, for example multiplication, or the 'exclusive or' (XOR) operator, in which the numeric form used is binary. For example, taking the first number in the message, 19, its binary form would be 10011. The first OTK number, 17, would be 10001 in binary. The encrypted binary number would be formed by scanning these two binary numbers and where corresponding bits were the same, a '0' bit would be entered in the encrypted binary number, otherwise '1':

|  | Plaintext | OTK | ---> | Encrypted |
|---|---|---|---|---|
| Letter | S | | | |
| Decimal arithmetic method: | 19 | + 17 | | 36 |
| Binary XOR method | 1 | XOR 1 | | 0 |
| | 0 | XOR 0 | | 0 |
| | 0 | XOR 0 | | 0 |
| | 1 | XOR 0 | | 1 |
| | 1 | XOR 1 | | 0 |

The originator of the message sends the encrypted message. The recipient selects the same page of the OTK as was used to encrypt the message and recovers the plaintext by subtracting an OTK number from the corresponding encrypted text number, and converting the result back to letters. If the XOR method had been used, he would carry out the XOR operation a second time, and the result once again would be the recovery of the plaintext message:

|  | Encrypted | OTK | ---> | Plaintext |
|---|---|---|---|---|
| Decimal arithmetic method: | 36 | - 17 | | 19 |
| Binary XOR method | 0 | XOR 1 | | 1 |
| | 0 | XOR 0 | | 0 |
| | 0 | XOR 0 | | 0 |
| | 1 | XOR 0 | | 1 |
| | 0 | XOR 1 | | 1 |
| Letter | | | | S |

Unless the pad falls into unfriendly hands the system is safe from crypto-analysis.

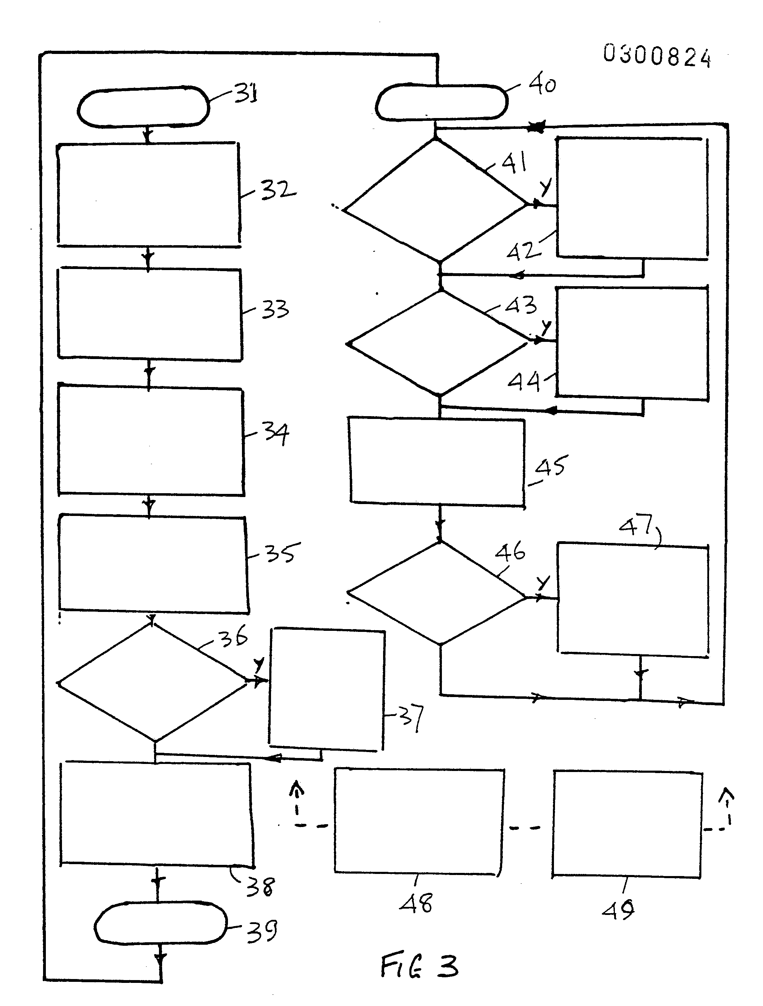

Referring now to Figure 3 there is shown a flow diagram for the encryption/decryption program. The first part of the program includes the initialisation routine and starts at 31 with "start", whereupon the following process steps are executed in turn: 32 "initialise interrupt sectors"; 33 "establish valid hardware link between systems"; 34 "transmit current key-file position to remote terminal". This latter step reads an optical disk position from a recording made at the end of the last session of use. The recorded "next address" may be stored on the computer magnetic disk medium (floppy disk or hard disk if provided) or may be written on the optical disk if it is of the writeable kind.

The next step 35 is to "receive key file position from remote terminal". This is the address of the next position on the optical disk at the remote terminal. The two addresses may be the same or they may be different (if, for example, one of the terminals has communicated with a third terminal and used more of its key file). 36 is a decision step "is received pointer position greater?"; 37 is "set 'home' system disk pointer to 'received' pointer" and this applies if the received pointer is at a later position than the home pointer. Thus, an arbitration system sets both pointers to the furthermost position, so ensuring that no part of the key is used twice. The process block for this is 38 "Fill E KEY buffer and D KEY buffer" (both from the determined start position on the disk). 39 ends initialisation.

It is to be noted that the above-described arbitration technique can be used even when three or more terminals are connected for encrypted data transmission in a network. Again, the latest disk address of the set will be taken as the communal start position.

On initialisation, the encryption key buffer 17 and the decryption key buffer 22 (Figure 2) are loaded from the determined start address of the optical disk. The buffers are refilled from the disk on being exhausted and since they operate independently there will be a drift in the relative disk addresses used for the send and receive channels. Steps are taken to skip parts of the key which is being used more slowly in order to avoid

4

undue movement of the read head when feeding respective buffers. However, at the end of the transmission there will be a difference in the two disk addresses. The address which is used to determine the "next position" address to be recorded at the end of the transmission is the later address of the two.

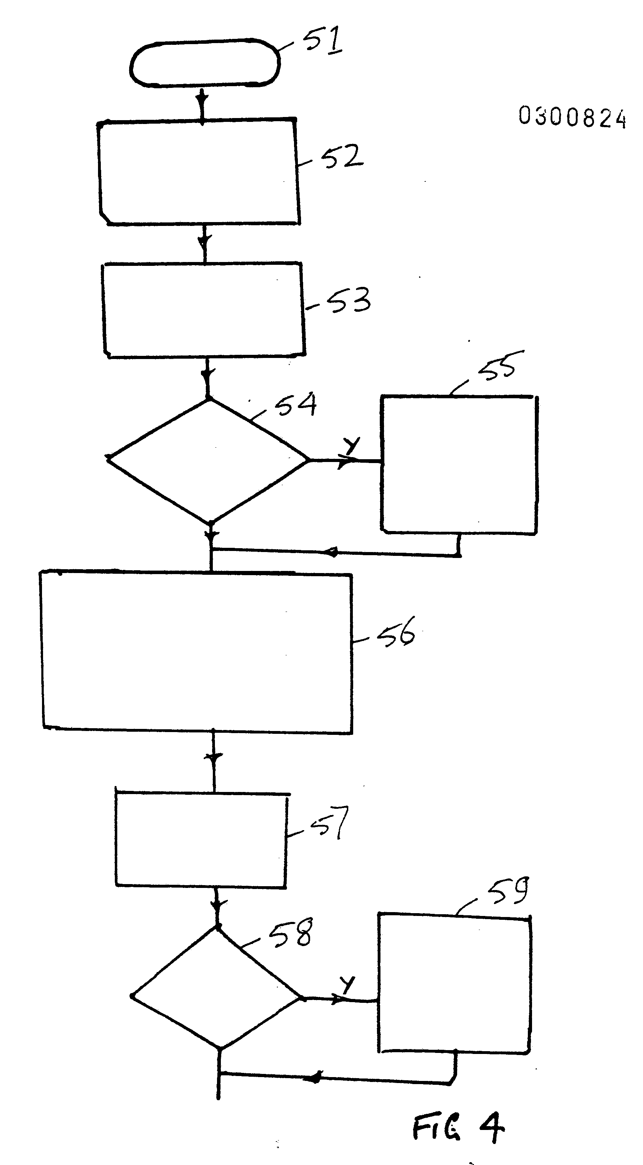

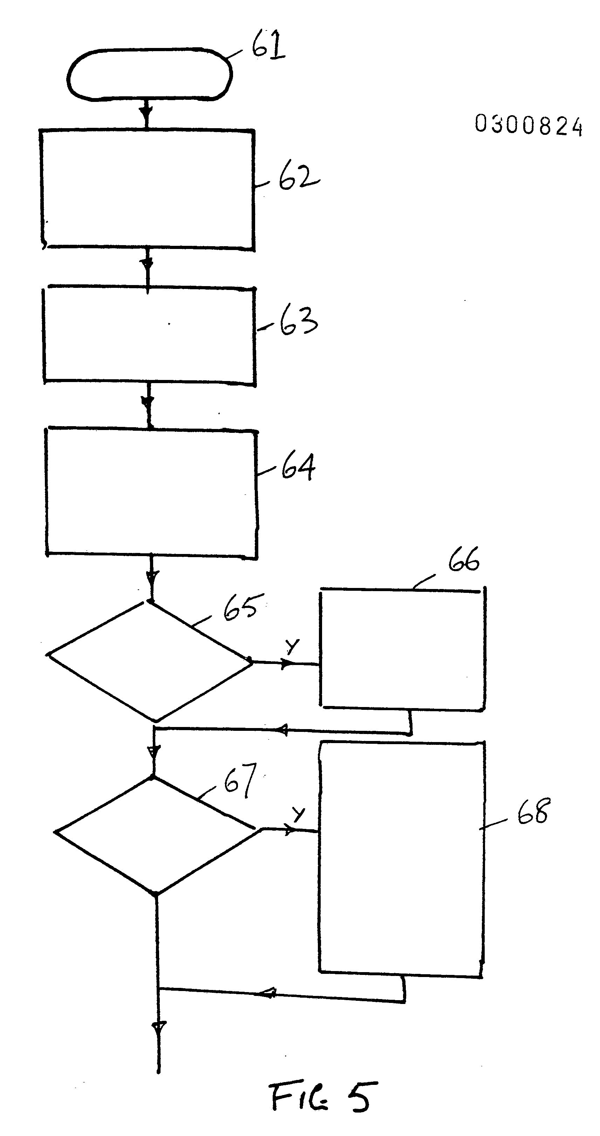

The main encryption loop starts at 40 "start main loop". 41 is "Do key buffers need filling?". If yes, 42 is "Fill appropriate buffer". The loop proceeds to 43 "Is there a received byte to encrypt?". If yes then 44 "Encrypt character routine". This is described with reference to Figure 5. 45 is "Output encrypted character to Com 1 serial port". 46 is "Is there a character to decrypt?". If yes then 47 "Decrypt character routine". This is described with reference to Figure 4.

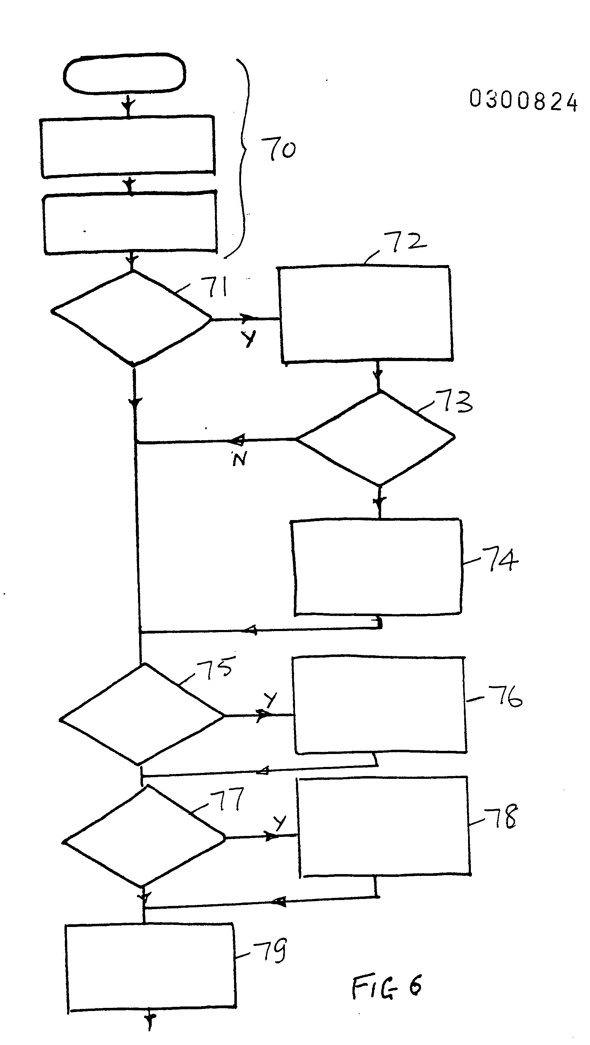

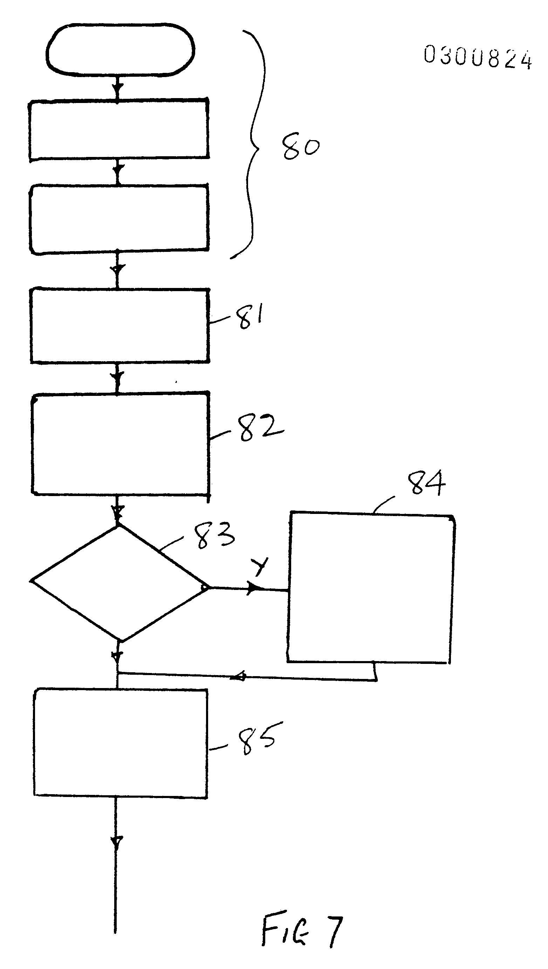

The main loop can be interrupted at any time by 48 "Asynchronous interrupt routine 1" or 49 "Asynchronous interrupt routine 2". These are described with reference to Figures 6 and 7 respectively.

Referring now to Figure 4 the decrypt character routine starts at 51 "start decrypt" and proceeds to 52 "read character from D buffer"; 53 "increment 'bytes to decrypt' pointer" and 54 "is there a valid synchronisation pointer?". Synchronisation pointers are sent with the transmitted text periodically in a special format. The format is detected at 54 and the synchronisation pointer is decoded. This represents the current position in the A or B encryption/decryption buffer. If synchronisation has slipped, 55 is invoked to "synchronise decryption key pointer".

The next process is 56 "Exclusive OR character to decrypt with key byte from D Key buffer" and "increment decryption key pointer". Next there is 57 "output decrypted byte" and 58 "is decryption key pointer at buffer end?". If yes, 69 "(1) Reset decryption by pointer, (2) Switch 'in use' buffer part A or B, (3) signal to fill 'out of use' buffer A or B".

Figure 5 shows the process for encrypting a character, starting with 61 "start encrypt", and then 62 "Read key byte from E key buffer" and "increment E key pointer"; 63 "Exclusive OR character to encrypt with E byte; 64 "Store encrypted character into E buffer" and "increment 'bytes to send' pointer" and 65 "is 'bytes to send' pointer greater than buffer?". If yes then 66 "Wrap around 'bytes to send' pointer". 67 is "is encryption key pointer at buffer end?". If yes then 68 "(1) set encryption key pointer to zero, (2) switch key buffer in use (A) or (B), (3) signal 'out of use' buffer needs filling".

Figure 6 shows asynchronous interrupt routine 1, starting at 70 with "start"; "save registers" and "Read byte from port". 71 is "is it a character to decrypt?". If yes then 72 "Store byte in D buffer" and increment "bytes to decrypt" pointer. Then 73 "is 'decrypt in' pointer at buffer end?". If yes then 74 "Reset" 'IN' key pointer to buffer start" and "flag buffer full". 75 is "is it a synchronisation pointer?" If yes then 76 "Store in received pointers structure with decryption 'in' key pointer value". 77 is "is it a protocol message?". If yes then 78 "Act on it". 79 is "Restore registers".

Figure 7 shows the asynchronous interrupt routine 2, starting with 80 "start"; "save registers" and "Read byte from port". 81 is "store byte in buffer". 82 is increment bytes to "encrypt 'in' pointer". 83 is "is encrypt 'in' pointer at buffer end?". If yes then 84 "Reset bytes to encrypt 'in' pointer to buffer start". 85 is "Restore registers".

In using user-written disks for the key data, it is important to be able to generate a truly random signal for utmost security.

Methods of deriving random number sequences from physical events are well known; tossing dice, monitoring "white" noise from a waterfall, using Geiger counters to detect radioactive decay, "noisy" diodes etc.. In connection with this invention such a program, interfaced to a suitable "noisy" source, has been developed.

Two problems arise with physically generated key sequences. First, the physical process may have unsuspected periodicity or biases towards particular key values occurring more frequently than others, or to certain sub-sequences of keys recurring more frequently than would be expected by chance.

In connection with this invention, statistical computer programs have been developed to detect these situations and reject a block of keys if it contains such periodicities or biases, and to correct small biases at the bit level by using the Exclusive-Or or pairs of bits rather than the bite themselves. Use is made of sampling theory using the Binomial and Poisson distributions as appropriate.

Secondly, even in a truly "random" physical process we expect by definition to encounter subsequences from time to time which are, considered on their own, highly biased or contain periodic cycles. This may introduce a security risk. The same detection and rejection method described above deals with the second problem also.

The invention is not restricted to the details of the above described embodiment. For example, other forms of mass digital data storage medium may be used, including "Smart cards", which currently store about 4 M bytes; removable computer hard disk packs -currently 30 - 100 M bytes and Bernoulli disks, of similar capacity.

## Claims

1. A cryptographic communication system comprising at least two transmitter/receiver terminals, each terminal having a microprocessor, a random access memory and a random access mass storage unit with a digital mass storage device, the mass storage devices holding identical digital key data for encryption and decryption; a communication link coupling the terminals; and programs for controlling the micro-processors whereby digital or digitised signals to be transmitted between the terminals are encrypted and decrypted, the programs being effective to determine for each transmission (a) an initialisation mode and (b) a transmission mode, the initialisation mode being such as to determine a particular mass storage device start address unique to that transmission from which data will start to be read as the one time key and the transmission mode being such as to cause the said signals to be encrypted by digital combination with continuously successive digits from one mass storage device in real time starting at said start address, and to cause decryption by a complementary digital operation with corresponding parts of the one time key from the other mass storage device.

2. A cryptographic communication system as claimed in Claim 1 wherein the mass storage devices are optical disks.

3. A cryptographic communication system as claimed in Claim 2 where the optical disks are user writeable.

4. A cryptographic communication system as claimed in Claim 2 wherein the optical disks are commercial pre-recorded disks.

5. A cryptographic communication system as claimed in any of the preceding claims wherein the microprocessor and RAM are components of a microcomputer and said digital combination is a standard logical function of the microcomputer operating system.

6. A cryptographic communication system as claimed in Claim 5 wherein the logical function is the XOR function.

7. A cryptographic communication system as claimed in any of the preceding claims wherein the RAM for each terminal includes an encryption buffer and a decryption buffer and each buffer has two parts, the arrangement being such that one part is filled from the mass storage device as the other part is being read to give the one time key.

0300824

FIG 1

0300824

FIG 2

0300824

FIG 3

0300824

FIG 4

0300824

FIG 5

0300824

FIG 6

0300824

FIG 7